Europäisches Patentamt

European Patent Office

Office européen des brevets

Veröffentlichungsnummer: **0 282 762**

**A2**

## EUROPÄISCHE PATENTANMELDUNG

Anmeldenummer: 88102535.7

Int. Cl.⁴ **A23F 5/02**

Anmeldetag: 22.02.88

Priorität: 18.03.87 DE 3708785

Veröffentlichungstag der Anmeldung:
21.09.88 Patentblatt 88/38

Benannte Vertragsstaaten:
**AT BE CH DE ES FR GB IT LI LU NL SE**

Anmelder: **Jacobs Suchard GmbH**
**Langemarckstrasse 8-20**
**D-2800 Bremen 1(DE)**

Erfinder: **Bonne, Harry**
**In der Appenhalten 26**
**CH-8706 Meilen(CH)**
Erfinder: **Vogt, Siegfried**
**Gaussstrasse 30**
**D-2804 Lilienthal(DE)**
Erfinder: **Rehfeldt, Annett-Gabriele, Dr.**
**Kopernikusstrasse 126**
**D-2800 Bremen-Horn(DE)**

Vertreter: **Bolte, Erich, Dipl.-Ing. et al**
**c/o Meissner, Bolte & Partner Patentanwälte**
**Hollerallee 73**
**D-2800 Bremen 1(DE)**

Verfahren zur Verbesserung von Röstkaffee.

Zur Verbesserung der Qualität, insbesondere der organoleptischen Eigenschaften von Röstkaffee, wird die Acidität der grünen (ungerösteten) Kaffeebohnen gesteigert. Dies geschieht bevorzugt durch Imprägnierung der Rohkaffeebohnen mit Säure in wäßriger Lösung. Diese Imprägnierung führt zu einer deutlichen Erhöhung des Gehalts an titrierbaren Säuren im Röstkaffee und zu einer Qualitätsverbesserung hinsichtlich Aroma, Geschmack und Farbe des Röstkaffees.

EP 0 282 762 A2

## Verfahren zur Verbesserung von Röstkaffee

Die Erfindung betrifft ein Verfahren zur qualitativen bzw. organoleptischen Verbesserung von Röstkaffee.

Der Geschmack von Röstkaffee bzw. von Röstkaffeegetränken wird wesentlich von der Qualität des Rohkaffees bestimmt. Rohkaffee der Gattungen "Columbia mild" und anderer "Mild-Gattungen" sind qualitativ hochwertig und ergeben einen geschmacklich erstklassigen Röstkaffee. Hingegen zählen z.B. die Arten "Brazilian mild" und "Robusta" zu den qualitativ geringwertigen Kaffeesorten.

Da die Qualität des Rohkaffees in direkter Relation zum Preis steht, ist die Industrie bestrebt, aus Rohkaffee niedrigerer Qualität einen qualitativ hochwertigen Röstkaffee herzustellen. Die Bemühungen konzentrierten sich bisher vornehmlich auf den Röstprozeß und auf das fertige Produkt. So wurden in der Röst-Technologie z.B. das "Druck-Rösten" sowie das "Kurzzeit-Rösten" entwickelt. Allerdings sind die bislang erzielten Ergebnisse unbefriedigend.

Ziel der vorliegenden Erfindung ist es nun, ein Verfahren zur Verbesserung der Qualität von Röstkaffee aus Rohkaffee vor allem minderer Qualität bereitzustellen.

Diese Aufgabe wird erfindungsgemäß dadurch gelöst, daß die Acidität von Rohkaffee, insbesondere durch Anreicherung der Rohkaffeebohnen mit Säure, erhöht wird.

Abweichend von den bisherigen Verfahren zur Qualitätsverbesserung von Rohkaffee wird im erfindungsgemäßen Verfahren Rohkaffee einer Behandlung unterworfen, die sich als Qualitätsverbesserung des Röstkaffees auswirkt. Eine Erhöhung der Acidität des Rohkaffees führt überraschenderweise zu einer merkbaren, meßbaren und somit beeinflußbaren Verbesserung des Röstkaffees hinsichtlich seiner organoleptischen Eigenschaften wie Geschmack, Aroma, Farbe.

Eines der wichtigsten Qualitäts-Merkmale von Röstkaffee-Aufgüssen ist ihre Acidität, die als pH-Wert bzw. als titrierbare Säuren gemessen wird. In Tabelle I sind die Aciditätswerte von Röstkaffee-Aufgüssen, hergestellt aus Kaffee verschiedener Provenienzen, aufgeführt.

### Tabelle I

| Kaffee-Provenienz | titrierbare Säure ml/100 g | pH |
|---|---|---|
| Columbia Milds | | |
| Kenya | 32 | 5,0 |
| Andere Milds | | |
| Guatemala | 29 | 5,1 |
| Brazilia Mild | | |
| Santos | 25 | 5,4 |
| Robusta | | |
| Elfenbeinküste | 19 | 6,1 |

Alle Proben: Dripfilter brew 60 g/l;

Farbwert: 10 Agtron-Einheiten

Allgemein gilt. daß aus Rohkaffee hoher Qualität Röstkaffee-Aufgüsse mit hoher Acidität bzw. relativ niedrigem pH-Wert hergestellt werden. Rohkaffee minderer Qualität gibt Röstkaffee-Aufgüsse mit niedrigerer Acidität bzw. relativ hohem pH-Wert.

Erfindungsgemäß wird nun die natürliche Acidität von Kaffee minderer Qualität erhöht, und zwar bevorzugt durch eine Anreicherung der Rohkaffeebohnen mit Säure in wäßriger Lösung.

Für diese Behandlung kommen z.B. Säuren in Frage, die natürlicherweise auch in Kaffee enthalten sind. wie Essigsäure. Citronensäure. Die Säuren müssen thermisch relativ stabil sein und eine geringe Flüchtigkeit aufweisen. Besonders günstige Ergebnisse konnten bei Verwendung von Citronensäure und Phosphorsäure erzielt werden. Die Acidität des Rohkaffees kann auch mit Hilfe sauer reagierender Salze erhöht werden. Diese werden ebenfalls in wäßriger Lösung dem Rohkaffee zugeführt. Beispiele für derartige Salze sind Calciumphosphat und Calciumcitrat.

Die Säure wird dem Rohkaffee vorzugsweise in wäßriger Lösung zugeführt. Hierfür bieten sich zwei Verfahren als besonders vorteilhaft an.

Bei einem dieser Verfahren wird die Menge der Lösung so gewählt, daß diese von dem zu behandelnden Rohkaffee völlig absorbiert wird.

Dieses Ergebnis tritt dann ein, wenn die Menge der wäßrigen, mindestens eine Säure enthaltenden Lösung weniger als dem 0,9-fachen, vorzugsweise etwa dem 0,5-fachen, des Trockengewichts des Rohkaffees entspricht. Die Menge an Säure in der Lösung beträgt insbesondere das 0,005-bis 0.025-fache des Trockengewichts des Rohkaffees.

Um eine optimale Verteilung der Säure über die Rohkaffeebohnen der Charge zu gewährleisten, wird die vorstehende Behandlung in einem Mischer durchgeführt, in dem Lösung und Rohkaffee umgewälzt werden (beispielsweise 2 h Mischen bei einer Temperatur von 70° C). Alternativ kann der Rohkaffee durch Förderorgane an eine Stelle gebracht werden, wo der Rohkaffee mit der durch eine Pumpe umlaufend geförderten Lösung bis zur völligen Absorption immer wieder in Berührung gebracht wird.

Bei dem anderen erfindungsgemäßen Verfahren wird eine Lösungsmenge eingesetzt, die größer ist als die maximal vom Rohkaffee aufzunehmende. In der Praxis wird die Menge der wäßrigen Lösung vorzugsweise so gewählt, daß der Rohkaffee (Charge) ständig benetzt ist. Durch fortwährenden Umlauf des Lösungsmittels wird eine homogene Aufnahme der Säure durch den Rohkaffee gewährleistet. Um zu vermeiden, daß die wäßrige Lösung der Säure aus dem Rohkaffee wasserlösliche Kaffee-Inhaltsstoffe entfernt, wird ein Extraktionsgleichgewicht zwischen der Lösung und dem Rohkaffee hergestellt. Zu diesem Zweck wird eine Lösung eingesetzt, die alle im Rohkaffee vorhandenen wasserlöslichen Bestandteile enthält. Mengenverhältnis und Konzentration dieser Substanzen sind so gewählt, daß sich die Zusammensetzung eines mit Wasser gesättigten (aufgequollenen) Rohkaffees in bezug auf diese Bestandteile auch bei längerer Berührung mit der Lösung nicht verändert.

Dieses Ergebnis wird z.B. dann erreicht, wenn ein originärer Rohkaffee-Extrakt mit etwa 21 % (Gewichtsprozente) Trockensubstanz als Lösung eingesetzt wird. In diesem Gleichgewichtsextrakt ist die aufzunehmende Säure im Überschuß vorhanden.

Unter Beachtung des Extraktgleichgewichts kann Rohkaffee in einem oder mehreren hintereinandergeschalteten Behandlungsbehältern mit Säuren angereichert werden. Um die Behandlungszeit so kurz wie möglich zu halten, wird erfindungsgemäß die Säurekonzentration des in den (ersten) Behandlungsbehälter eintretenden Extrakts mit geeigneten technischen Mitteln überwacht und auf einem konstanten (hohen) Niveau gehalten.

Zur Durchführung des vorstehend erläuterten Verfahrens wird erfindungsgemäß im voraus das Absorptionsverhalten der jeweiligen Provenienz und/oder Mischung des zu behandelnden Rohkaffees experimentell bestimmt. Hieraus ergibt sich die erforderliche Kontaktzeit der Lösung mit dem Rohkaffee bei vorgegebener Säure-Konzentration.

Alternativ kann erfindungsgemäß die insgesamt einer Charge des Rohkaffees zugeführte Säuremenge gemessen und daraus der Grad der Anreicherung des Rohkaffees mit dieser Säure ermittelt werden.

Zur Beendigung des Absorptionsverfahrens wird der angereicherte Rohkaffee von der Lösung getrennt. Der Rohkaffee wird kurzzeitig mit Wasser gespült, um an der Oberfläche abgelagerte Säureanteile zu beseitigen.

Nach erfolgter Absorption wird der Rohkaffee zur Gewährleistung der Lagerfähigkeit auf den ursprünglichen Feuchtegehalt (8 % bis 12 %) getrocknet. Damit ist der Rohkaffee für das Röstverfahren vorbereitet. Die Trocknung erfolgt bevorzugt durch einen Heißluftstrom vom 120° C. Die Erhöhung der Acidität kann außer durch direkte Anreicherung des Rohkaffees mit Säure durch andere Verfahren erfolgen, etwa durch

- mikrobiologische Verfahren. z.B. Behandlung mit Bakterien oder Enzymen;
- thermische Hydrolyse, z.B. Erhitzen in Gegenwart von Feuchtigkeit bei Temperaturen unterhalb von 130°

3

C:

- Behandlung des Rohkaffee-Extraktes mit Ionenaustauscher, sukzessive Reintegration und Trocknung;
- elektrodialytische Behandlung des Rohkaffeebohnen-Extraktes mit sukzessiver Reintegration und Trocknung.

Überraschenderweise können durch dieses Verfahren der Acidität-Erhöhung Kaffees minderer Qualität auf den Standard hochwertiger Kaffee-Sorten gebracht werden. Röstkaffee-Aufgüsse von erfindungsgemäß vorbehandeltem Kaffee sind aromatischer im Geschmack und ansprechender in der Farbe, verglichen mit den Aufgüssen des gleichen unbehandelten Kaffees. Diese qualitative Verbesserung läßt sich anhand der folgenden Analysen von Röstkaffee feststellen:

- Untersuchung des Gehalts an titrierbaren Säuren;
- Untersuchung der wasserdampfflüchtigen Inhaltsstoffe, mengenmäßige Bestimmung aroma-relevanter Substanzen;
- Untersuchung der Färbung.

In der folgenden Tabelle II sind typische Analysenwerte von Röstkaffee-Aufgüssen aufgeführt. Die entsprechenden Rohkaffees waren unbehandelt.

## Tabelle II

| Kaffee-Provenienz | pH | titrierbare Säuren | HMF | Aroma-Index |
|---|---|---|---|---|
| Columbia | 5,1 | 29 | 54 | 123/147 |
| Brazil | 5,4 | 25 | 37 | 90/146 |
| Robusta | 6,1 | 19 | 15 | 84/182 |

Alle Proben: Aufbrüh-Filter 60 g/l;

Farbwert: 10 Agtron-Einheiten

Die angegebenen Analysenwerte belegen, daß die Acidität von Kaffee mit der Qualität des Kaffees steigt und der pH-Wert sinkt. Der Gehalt an Hydroxymethylfurfurol (HMF) in der wasserdampfflüchtigen Fraktion des Röstkaffee-Aufgusses ist bei der qualitativ hochwertigen Kaffee-Sorte "Columbia" bedeutend höher als z.B. bei der minderwertigeren Kaffeesorte "Robusta".

In der folgenden Tabelle sind die Analysendaten (pH-Wert, titrierbare Säuren, HMF-Gehalt, Aroma-Index) von Röstkaffee-Aufgüssen, hergestellt aus unbehandeltem Rohkaffee, denen aus mit Säure angereichertem Rohkaffee hergestellten gegenübergestellt. Als Säure wurde Citronensäure in unterschiedlicher Konzentration verwendet.

## Tabelle III

Effekt der Zugabe von 1 % Citronensäure

| Kaffee-Provenienz | pH | titrierbare Säure | HMF | Aroma-Index |
|---|---|---|---|---|
| Columbia unbehandelt | 5,1 | 29 | 54 | 123/147 |
| Columbia + 1 % Citronensäure | 4,9 | 34 | 112 | 170/130 |
| Brazil unbehandelt | 5,4 | 25 | 37 | 90/146 |
| Brazil + 1 % Citronensäure | 5,1 | 42 | 87 | 113/131 |
| Robusta unbehandelt· | 6,1 | 19 | 15 | 84/182 |
| Robusta + 1 % Citronensäure | 5,4 | 39 | 29 | 87/164 |
| Robusta + 2 % Citronensäure | 4,7 | 55 | 36 | 92/159 |

Versuche mit äquivalenten Mengen an $H_3PO_4$ zeigen entsprechende Resultate. Der Aroma-Index wurde durch Bestimmung der wasserdampfflüchtigen Aromastoffe im UV-Bereich ermittelt.

Vergleiche der in den Tabellen I - III aufgeführten Werte zeigen, daß die Imprägnierung des Rohkaffees mit Säure ei ne merkliche und meßbare Verbesserung des Röstkaffees bewirkt.

Vergleichsversuche zeigen, daß die Anreicherung der Rohkaffeebohnen mit Säure zu einer Beeinflussung der chemischen Prozesse während der Kaffeeröstung und somit zu einer veränderten chemischen Zusammensetzung des Röstkaffees führt. So wurde festgestellt, daß die Erhöhung der Acidität von Rohkaffee durch den Röstprozeß zu einer Vermehrung bestimmter Substanzgruppen im wasserdampfflüchtigen Teil des Aromas führt. Die Bildung anderer Substanzgruppen hingegen wird vermindert. Vermehrt treten auf: Furane allgemein und speziell Furfural, 5-Methylfurfural sowie Hydroxymethylfurfurol. Diese Substanzen haben offensichtlich günstige Auswirkungen auf den Geschmack des Röstkaffees bzw. des Kaffeeaufgusses. Ein relativ hoher Gehalt an den genannten Furanen ist typisch für unbehandelten Kaffee der Sorte "Arabica", die qualitativ hochwertig ist.

Die Bildung der Substanzgruppen Pyridin, Pyrazine und Thiophene nimmt merklich ab. Ihr Einfluß auf

5

den Geschmack des Röstkaffee-Aufgusses ist als negativ anzusehen. Diese Verbindungen treten in relativ hoher Konzentration in Röstkaffee der Sorte "Robusta" (niedrige Qualität) auf, wenn der Rohkaffee unbehandelt geblieben ist.

Tabelle IV gibt den Gehalt von Röstkaffee-Aufgüssen der Kaffeesorte "Columbia" an relevanten wasserdampfflüchtigen Substanzgruppen wieder. Analysiert wurden Röstkaffee-Extrakte von unbehandeltem Rohkaffee und von unterschiedlich behandelten Rohkaffee-Chargen.

Tabelle IV

Relevante Gruppen wasserdampfflüchtiger Verbindungen in imprägnierten Kaffees (COLUMBIA) (ppm/kg)

| | Original | + 2 % Citronensäure | + 5 % Citronensäure | + 2 % Phosphorsäure | + 0,5 % Phosphorsäure | + 1,5 % Kaliumhydroxyd (KOH) |
|---|---|---|---|---|---|---|
| Furfural | 68 | 241 | 497 | 160 | 119 | 48 |
| 2 Acetylfuran | 18 | 19 | 11 | 13,5 | 14 | 9,7 |
| 5 Me-furfural | 85 | 125 | 94 | 130 | 108 | 62 |
| 2 Me-tetrahydro-furan-3-on | 20 | 14,5 | 7,6 | 8 | 11,9 | 9,7 |
| Summe Furane | 324 | 443 | 630 | 364 | 324 | 256 |
| Summe Schwefel-subst. Furane | 3,2 | 1 | 1 | 0,9 | 1,36 | 4,15 |
| Summe M-Alkyl-pyrrole | 1,2 | 0,6 | 0,4 | 1,15 | 1,1 | 1,38 |
| Summe sonstige Pyrrole | 16,8 | 5,7 | 4,3 | 4 | 5,8 | 8,06 |
| Summe Thiophen-derivate | 6 | 4,2 | 1,8 | 1,65 | 1,1 | 3,55 |
| Pyridin | 15,5 | 1,9 | - | 1,08 | 7,3 | 29,3 |
| Summe Pyrazine | 146 | 32 | 8 | 28,5 | 64 | 241 |
| Summe flüchtige Phenole | 29,5 | 14,4 | 7,5 | 15 | 11,2 | 27,8 |
| "Gesamtaroma" | 665 | 587 | 722 | 670 | 634 | 845 |

Eine Anreicherung von Rohkaffee-Bohnen mit Säure führt demnach zu der beschriebenen veränderten chemischen Zusammensetzung der wasserdampfflüchtigen Fraktion des Röstkaffee-Aufgusses. Eine Imprägnierung der Rohkaffeebohnen mit Kalilauge, womit eine Erhöhung des pH-Wertes und eine Senkung der Acidität einhergeht, bewirkt eine verstärkte Maillard-Reaktion beim Röstvorgang und eine andere chemische Zusammensetzung der wasserdampfflüchtigen Fraktion. Der Anteil an Furanen sinkt. Pyridin, Pyrazine und Thiophene treten in höherer Konzentration auf. Die Bildung der zuletzt genannten Verbindungen ist unerwünscht, weil sie das Aroma des Röstkaffees nachteilig beeinflussen.

Eine Senkung der Acidität von Rohkaffee durch Zusatz von Lauge führt nicht zu einer Qualitätsverbesserung von Röstkaffee. Diese kann hingegen erfindungsgemäß nur durch Senkung des pH-Wertes, etwa durch Imprägnieren des Rohkaffees mit Säuren, erreicht werden.

Beschreibung eines Ausführungsbeispiels

Es wird eine Säurelösung hergestellt und auf etwa 70° C erhitzt. Die Konzentration der Säurelösung beträgt 2,43 %, das heißt 0,5 kg Säure (Citronensäure) in 20 kg Wasser.

50 kg Rohkaffee (Brazil) werden in einen beheizbaren Extrakteur mit Ablaß gegeben, ebenfalls bei einer Temperatur von etwa 70° C. Danach wird die Säurelösung in den Extrakteur mit Rohkaffee gegeben. Bei Aufrechterhaltung der Temperatur von etwa 70° C wird die Säurelösung während etwa 1,5 Stunden umgepumpt, bis die Lösung vollständig von dem Rohkaffee aufgenommen worden ist. Dabei quillt der Rohkaffee auf.

Die feuchten Rohkaffeebohnen werden in einen Wirbelschichttrockner umgefüllt und bei etwa 100° C während etwa 90 Minuten getrocknet. Die Trockendauer ist so gewählt, daß der Rohkaffee etwa den ursprünglichen Wassergehalt erhält.

Anschließend werden die so behandelten Rohkaffeebohnen normal geröstet.

**Ansprüche**

1. Verfahren zur qualitativen bzw. organoleptischen Verbesserung von Röstkaffee,
**dadurch gekennzeichnet,** daß die Acidität des Rohkaffees gesteigert und dieser danach geröstet wird.

2. Verfahren nach Anspruch 1, dadurch gekennzeichnet, daß der Rohkaffee mit Säure und/oder sauer reagierenden Salzen angereichert wird.

3. Verfahren nach Anspruch 1 oder 2, dadurch gekennzeichnet, daß dem Rohkaffee Säure in wäßriger Lösung zugeführt wird.

4. Verfahren nach Anspruch 1 sowie einem oder mehreren der weiteren Ansprüche, dadurch gekennzeichnet, daß dem Rohkaffee Essigsäure und/oder Phosphorsäure und/oder Citronensäure in wäßriger Lösung zugeführt wird.

5. Verfahren nach Anspruch 1 sowie einem oder mehreren der weiteren Ansprüche, dadurch gekennzeichnet, daß die Menge der wäßrigen Lösung und deren Konzentration so bemessen sind, daß der Rohkaffee die Lösung vollständig absorbiert.

6. Verfahren nach Anspruch 1 sowie einem oder mehreren der weiteren Ansprüche, dadurch gekennzeichnet, daß die Menge der wäßrigen Säurelösung etwa dem 0,2-bis 0,9-fachen, insbesondere dem 0,5-fachen, des Trockengewichts des Rohkaffees und die Säuremenge in der Lösung vorzugsweise dem 0,005-bis 0,025-fachen des Trockengewichts des Rohkaffees entspricht.

7. Verfahren nach Anspruch 1 sowie einem oder mehreren der weiteren Ansprüche, dadurch gekennzeichnet, daß die Behandlung des Rohkaffees mit der Säurelösung unter ständigem Vermengen von Rohkaffee und Säurelösung bei einer Temperatur oberhalb der Raumtemperatur, insbesondere bei etwa 70° C erfolgt.

8. Verfahren nach Anspruch 1 sowie einem oder mehreren der weiteren Ansprüche, dadurch gekennzeichnet, daß der Rohkaffee nach Absorption bis auf einen Feuchtigkeitsgehalt, der im wesentlichen dem von unbehandeltem Rohkaffee vor der Röstung entspricht, getrocknet wird.

9. Verfahren nach Anspruch 1 sowie einem oder mehreren der weiteren Ansprüche, dadurch gekennzeichnet, daß die wäßrige Lösung außer der anzureichernden Säure den Extrakt aller wasserlöslichen Kaffee-Inhaltsstoffe des Rohkaffees enthält, wobei die Konzentration der Rohkaffee-Inhalts stoffe - außer der anzureichernden Säure - derart gewählt wird, daß die Kaffee-Inhaltsstoffe im Rohkaffee einerseits und in der Lösung andererseits im Gleichgewicht miteinander sind.

10. Verfahren nach Anspruch 9 sowie einem oder mehreren der weiteren Ansprüche, dadurch gekennzeichnet, daß der Rohkaffee vor der Behandlung mit der Lösung mit Wasser zur Sättigung angereichert (aufgequollen) wird, wobei die Löung - bis auf die anzureichernde Säure - in bezug auf die übrigen Kaffee-Inhaltsstoffe und Wasser im Gleichgewicht mit den Rohkaffeebohnen ist.

11. Verfahren nach Anspruch 1 und 9 sowie einem oder mehreren der weiteren Ansprüche, dadurch gekennzeichnet. daß die wäßrige Säurelösung mit Rohkaffee-Extrakt in einem Kreislauf durch den Rohkaffee hindurchgeleitet wird, daß dabei die aus dem Rohkaffee austretende Lösung hinsichtlich ihres Säuregehalts überwacht wird, daß weiterhin die wieder in den Rohkaffee eintretende wäßrige Lösung mit Säure entsprechend ergänzt wird und daß dieser Kreislauf so lange durchgeführt wird, bis der Rohkaffee einen gewünschten Säuregehalt aufweist.

12. Verfahren nach Anspruch 11 sowie einem oder mehreren der weiteren Ansprüche, dadurch gekennzeichnet, daß die Menge der der wäßrigen Lösung im Kreislauf zugeführten Säure gemessen wird.

13. Verfahren nach Anspruch 1, dadurch gekennzeichnet, daß die Steigerung der Acidität von Rohkaffee durch mikrobiologische Techniken, insbesondere Behandlung mit Enzymen, bewirkt wird.

14. Verfahren nach Anspruch 1, dadurch gekennzeichnet, daß die Steigerung der Acidität von Rohkaffee durch thermische Hydrolyse, z.B. Erhitzen in Gegenwart von Feuchtig keit bei Temperaturen über 130° C, bewirkt wird.

15. Verfahren nach Anspruch 1, dadurch gekennzeichnet, daß die Steigerung der Acidität von Rohkaffee durch Behandlung von Rohkaffee-Extrakt mit Ionenaustauscher, gefolgt von sukzessiver Reintegration und Trocknung, bewirkt wird.

16. Verfahren nach Anspruch 1, dadurch gekennzeichnet, daß die Steigerung der Acidität von Rohkaffee durch elektrodialytische Behandlung von Rohkaffee-Extrakt mit sukzessiver Reintegration und Trocknung bewirkt wird.